# EUROPÄISCHE PATENTANMELDUNG

(11) **EP 3 915 512 A1**
(43) Veröffentlichungstag der Anmeldung: **01.12.2021**
(21) Anmeldenummer: 20176489.1
(22) Anmeldetag: 26.05.2020
(51) Int. Cl.: A61C 13/225, A61C 13/271, A61C 13/267, A61C 13/00, A61C 5/70

(54) **MODULARES ZAHNPROTHESENSYSTEM**

(71) Anmelder: WDT-Wolz-Dental-Technik GmbH, 55566 Bad Sobernheim (DE)
(72) Erfinder: Wolz, Stefan, 55566 Bad Sobernheim (DE)
(74) Vertreter: Götz, Gudrun Veronika

(57) **Zusammenfassung**

Die Erfindung betrifft ein Zahnprothesensystem (100), aufweisend mindestens ein Prothesenbasismodul (110), insbesondere eine Oberkieferplatte oder einen Unterkieferbügel, ein oder mehrere Retentionsfeldmodule (120) zur Verbindung mit Zahnersatz und/oder ein oder mehrere Befestigungsmittelmodule (130) zur Befestigung des Zahnprothesensystems (100) an der Restbezahnung (200) eines Patienten. Es ist die Aufgabe der vorliegenden Erfindung, ein Prothesensystem zu schaffen, welches, kostengünstig nach unterschiedlichen Verfahren hergestellt, z.B. gegossen und/oder gefräst werden kann und außerdem in einfacher Weise erweiterbar und/oder reparierbar ist. Die Aufgabe wird dadurch gelöst, dass das mindestens eine Prothesenbasismodul (110), das eine oder die mehreren Retentionsfeldmodule (120) sowie das eine oder die mehreren Befestigungsmittelmodule (130) modular als separate Einzelmodule (110, 120, 130) ausgebildet sind und jeweils über Ausrichtmittel (140) in einer durch die Ausrichtmittel (140) zueinander vorgegebenen Stellung und/oder Position derart ausrichtbar sind, dass das Zahnprothesensystem (100) entlang einer Einschubachse (z) in die Restbezahnung (200) des Patienten einführbar und daran befestigbar ist.

## Beschreibung

Die Erfindung betrifft ein Zahnprothesensystem, aufweisend mindestens ein Prothesenbasismodul, insbesondere eine Oberkieferplatte oder einen Unterkieferbügel, ein oder mehrere Retentionsfeldmodule zur Verbindung mit Zahnersatz und/oder ein oder mehrere Befestigungsmittelmodule zur Befestigung des Zahnprothesensystems an der Restbezahnung eines Patienten.

Die Erfindung betrifft außerdem ein Verfahren zur Herstellung und/oder zur Erweiterung eines Zahnprothesensystems.

Der Fachbereich des prothetischen und herausnehmbaren Zahnersatzes umfasst Teil- und Totalprothesen sowie deren Herstellung und Einpassung in den Mundraum eines Patienten. Teilprothesen, auch als partielle Prothesen bezeichnet, ersetzen hierbei nur einen Teil der Zähne und können an der Restbezahnung des Patienten befestigt werden. Eine einfache Ausführung einer Teilprothese umfasst eine sogenannte Prothesenbasis, aus Kunststoff oder Metall, welche sich als Platte oder Bügel an den Gaumen des Patienten anpasst. Gängige Ausführungen sind die so bezeichnete Oberkieferplatte sowie der Unterkieferbügel. Mit der Prothesenbasis sind Befestigungsmittel aber auch Retentionsfelder verbunden. Die Befestigungsmittel, zumeist sogenannte Klammern, die einen Zahn umgreifen und/oder Auflagen, die auf einem Zahn aufliegen, dienen zur Befestigung und Abstützung an einem oder mehreren Zähnen der noch vorhandenen Restbezahnung des Patienten. Die Retentionsfelder liegen auf dem Kieferkamm auf und bilden eine Art Bewehrung oder Armierung für den Zahnersatz. Der Zahnersatz selbst, d. h. die künstlichen Zähne sowie der den Kieferkamm umgebende Prothesensattel werden vom Zahntechniker für gewöhnlich aus Kunststoff in die als Bewehrung dienenden Retentionsfelder eingegossen.

Im Stand der Technik werden solche Teilprothesen üblicherweise als einstückige Modellgussprothese im Zahnlabor aus Kunststoff oder Metall hergestellt. Die Prothesenbasis ist einstückig mit Klammern und Retentionsfeldern verbunden. Die Modellgussprothesen werden hierzu zunächst aus Wachsfertigteilen per Hand modelliert oder aber mit einer 3D-Software erstellt und anschließend von einem 3D-Drucker geplottet. Die Modellationen werden in Einbettmasse eingebettet und ausgeschmolzen. Die nach dem Ausschmelzen oder Ausbrennen entstandenen Hohlräume in der Einbettmasse werden dann mit einer Modellgusslegierung, wie z.B. einer Chrom-Cobalt-Molybdän-Legierung gefüllt. Anschließend werden Einbettmasse und Angussstifte entfernt und der Modellguss sandgestrahlt, elektrolytisch geglänzt, aufgepasst und hochglanzpoliert.

Alternativ kann eine solche Modellgussprothese auch aus einem Edelstahlblock herausgefräst werden, allerdings bestehen zwischen den Klammern und dem tiefsten Punkt, z.B. dem Gaumendach, Höhenunterschiede von bis zu 30 mm. Daher werden 30 mm hohe Edelstahlböcke benötigt, um die Modellgussprothese vollständig herausfräsen zu können. Bedenkt man jedoch, dass eine Gaumenkieferplatte nur eine Wandstärke von 0,30 mm - 1,00 mm aufweist, entstünde bei solchen Vorgängen ein sehr unwirtschaftliches Verhältnis mit einem Materialverlust von ca. 95 % sowie einem ausgesprochen hohen Werkzeugverschleiß bei der CAD-CAM Bearbeitung. Aus diesem Grund wird heutzutage auch auf digitale Herstellungsmethoden, wie die bekannte SLM-Technologie (selektives Laserschmelzen) zurückgegriffen. Diese Laser-Sinter-Technologie benötigt bei hohen Bauteilen aber auch eine ca. 50% höhere Fertigungszeit. Außerdem kann es bei diesen Übermaßen zu Spannungen sowie hohen Ungenauigkeiten kommen.

Im Anschluss an die Herstellung erfolgt das zeitaufwendige und schwierige Aufpassen der gesamten Konstruktion der Modellgussprothese auf einem Gipsmodell des Mundraums und Kiefers mit Restbezahnung des Patienten. Dieses empfindliche Gipsmodell dient bis heute als einzige Kontrollmöglichkeit für die Endpassung der Modellgussprothese an die Mundraum- und Kieferstruktur des Patienten. Hierzu wird die Modellgussprothese vorsichtig auf das Gipsmodell aufgepasst und alle möglichen Fehlerquellen, wie z.B. fehlerhafte Abdrücke des Zahnarztes, Scanfehler, fehlerhafte Gipsexpansionen, fehlerhafte Einbettmassenmischungen, Einbettfehler durch Lufteinschlüsse - einschließlich Lunker und Oxidationen der Legierungen - sowie Fehler durch Fräswerkabnutzungen, Verzüge der 3D-gedruckten Kunststoffkonstruktionen oder Sinterkonstruktionen usw. vom Zahntechniker per Hand durch mühsames Schleifen der Modellgussprothese ausgeglichen. Die Modellgussprothese wird immer wieder auf das empfindliche Gipsmodell gedrückt, bis diese, ohne zu kippeln und mit einer Genauigkeit von ca. 0,01 mm auf das Gipsmodell passt. Wird hierbei jedoch das Gipsmodell beschädigt, ist eine ausreichende Genauigkeit nicht mehr zu erreichen.

Auch ist es beispielsweise beim Ersetzen einer oder mehrerer abgebrochener Klammern aufwändig, die ursprünglich vorgesehene Einschubachse abzuschätzen. Die Einschubachse ist die Achsrichtung entlang derer die Teilprothese in den Mundraum des Patienten eingeschoben wird. Zur Festlegung der Einschubachse sind Hinterschnitttiefen von Befestigungsmitteln wie Klammern sowie die Äquatorialebene der Restbezahnung zu berücksichtigen, wobei die Einschubachse senkrecht zur Äquatorialebene der Restbezahnung steht. Beispielsweise ist aus der EP 3 324 879 B1 ein rechnergestütztes Verfahren zur Planung einer Reparatur oder Anpassung einer Teilprothese bekannt, bei der die Einschubachse anhand eines digitalen 3D-Modells des Kiefers sowie der Prothese bestimmt wird.

Gerade bei einstückig hergestellten Modellgussprothesen wäre, z.B. bei Verlust eines zur Befestigung der Teilprothese verwendeten Restzahnes, eine Erweiterung um zu ergänzende, künstliche Zähne mit hohen Kosten verbunden, da Klammern und Auflagen herausgeschliffen werden müssen und die Modellgussbasis aufwendig umgearbeitet werden muss. Auch ist oftmals eine Erweiterung wirtschaftlich nicht sinnvoll, bspw. sofern neue Klammern, Auflagen und/oder Retentionsfelder für neue Kunststoffzähne aufwendig angelötet werden müssten. Die beim Löten entstehende große Hitze bedingt nämlich auch, dass die schon vorhandenen Kunststoffzähne der Modellgussprothese entfernt und später wieder neu eingearbeitet werden müssten. In diesen Fällen bleibt als einzige Möglichkeit eine ebenfalls teure Neuanfertigung.

Eine Vorrichtung zum Zahnersatz oder zur Zahnregulierung, bei der drahtförmige Befestigungselemente einzeln hergestellt und in einen auf dem Zahnfleisch und/oder dem Gaumen aufliegenden und aus Gießharz bestehenden Teil eingegossen werden, ist aus der DE 44 20 044 A1 bekannt. Die US 5,102,337 B1 sieht ebenfalls vor, Klammern aus einem Thermoplast einzeln vorzufertigen und diese mittels eines schnelltrocknenden Klebers an die Teilprothese anzukleben. Ein Stecksystem zum Verbund einzelner Bestandteile von Modellgussprothesen ist in der DE 41 38 975 A1 offenbart. Hierbei werden die einzelnen Bestandteile der Modellgussprothese, die mit Bohrungspaaren versehen sind, voneinander getrennt im Mund des Patienten oder auf dem Gipsmodell positioniert. Anschließend werden die Bestandteile mit einem Stecker neu fixiert, indem dieser in die Bohrungen eingesteckt und dort verklebt oder zementiert wird. Eine ähnliche, aus Teilstücken gefräste Zahnprothese ist aus der DE 10 2014 104 456 A1 bekannt. Die Teilstücke werden zunächst aus einem Fräsblock herausgefräst und anschließend stoffschlüssig miteinander verbunden, insbesondere geklebt, geschweißt oder gelötet. Nachteilig ist an den bekannten Verbindungen zwischen Prothesenbasis und Verbindungselementen jeweils, dass es sich um nicht lösbare Verbindungen handelt und eine Erweiterung oder Reparatur der Modellgussprothese nur wie bereits beschrieben durch aufwendiges Schleifen und Löten vorzunehmen ist.

Eine nicht-stoffschlüssige Verbindung zwischen einem Verankerungsteil, z.B. einer Krone und einem daran über eine lösbare Verbindungseinrichtung, wie Geschiebe, Riegel, Schraube oder dergl., gehaltenen Prothesengerüst oder Modellguss ist aus der EP 0 347 574 A2 bekannt. Das Prothesengerüst weist hierzu einen aus einer Chrom-Kobalt-Molybdän-Verbindung hergestellten, bügelförmigen Verbinder auf. Der Verbinder wird in der Gussform platziert und das Verankerungsteil, also bspw. eine Krone sowie das Zahnersatzteil, also das Prothesengerüst bzw. die Prothesenbasis direkt auf den Verbinder aufgegossen, wobei aber die Materialien keine stoffschlüssige Verbindung miteinander eingehen sollen. Auf diese Weise soll ein lösbarer Passsitz zwischen der Krone und dem Verbinder einerseits sowie zwischen dem Verbinder und dem Prothesengerüst andererseits erhalten werden. Der Verbinder selbst ist mit einem Verbindungsorgan und mit einem Anschluss für das Prothesengerüst vorgefertigt, wobei das Verbindungsorgan fertig ausgebildete Passflächen zum Formschluss mit der Krone aufweist und das Prothesengerüst auf den Anschluss aufgegossen wird. Am Anschluss weist der Verbinder ein erstes Verbindungsorgan auf, ein zugeordnetes zweites Verbindungsorgan sitzt an der Krone, die Verbindungsorgane sind zur Ausbildung der lösbaren Verbindungseinrichtung als Geschiebe, Riegel, Schraube oder dergl. ausgebildet.

Nachteilig ist hier, dass die beschriebene, formschlüssige Verbindung durch Aufgießen der Krone aus naheliegenden Gründen nicht zur Befestigung an der natürlichen Restbezahnung eines Patienten geeignet ist. Darüber hinaus ist auch eine Erweiterung der Prothese nach wie vor aufwendig, neue Prothesenteile müssen stets auf den Verbinder aufgegossen werden, eine Herstellung durch ein spanabhebendes CAD-CAM-Verfahren oder einen 3D-Drucker ist ebenfalls nicht möglich.

Es ist die Aufgabe der vorliegenden Erfindung, die Nachteile aus dem Stand der Technik zu eliminieren und insbesondere ein Prothesensystem zu schaffen, welches, kostengünstig nach unterschiedlichen Verfahren hergestellt, z.B. gegossen und/oder gefräst werden kann und außerdem in einfacher Weise erweiterbar und/oder reparierbar ist.

Die Aufgabe wird gelöst durch ein Zahnprothesensystem gemäß Anspruch 1.

Ein erfindungsgemäßes Zahnprothesensystem der eingangs näher beschriebenen Art kennzeichnet sich dadurch, dass das mindestens eine Prothesenbasismodul, das eine oder die mehreren Retentionsfeldmodule sowie das eine oder die mehreren Befestigungsmittelmodule modular als separate Einzelmodule ausgebildet sind und jeweils über Ausrichtelemente in einer durch diese Ausrichtelemente zueinander vorgegebenen Stellung und/oder Position derart ausgerichtet oder ausrichtbar sind, dass das Prothesensystem entlang einer, insbesondere Hinterschnitttiefen und/oder die Äquatorialebene der Restbezahnung berücksichtigenden Einschubachse in die Restbezahnung des Patienten einführbar und daran befestigbar ist.

Die Erfindung sieht also vor, erforderliche Bestandteile einer Zahnprothese modular, jeweils als Einzelmodule separat voneinander auszubilden und mittels Ausrichtmitteln eine Stellung, bspw. einen Winkel, und/oder Position, bspw. Prämolar 15, Molar 26, Inzisiv 11 usw. der Einzelmodule zueinander vorzugeben, sodass die in dieser Stellung und/oder Position zueinander ausgerichteten Einzelmodule gemeinsam eine Zahnprothese ausbilden, die entlang einer möglichen, insbesondere die Äquatorialebene und Hinterschnitttiefen berücksichtigenden, Einschubachse in die Restbezahnung des Patienten eingeführt werden kann und an dieser befestigbar ist. Durch den Einsatz von Ausrichtmitteln wird ermöglicht, die Einzelmodule voneinander getrennt bzw. separat herzustellen und anschließend zueinander mit einer gemeinsamen Einschubachse auszurichten. Der Begriff Restbezahung ist nicht ausschließlich auf natürliche Zähne des Patienten begrenzt, sondern umfasst auch Implantate und/oder Kronen, die bereits fest in das Gebiss integriert sind oder auch erst zu einem späteren Zeitpunkt integriert werden können.

Die Herstellung der Einzelmodule, also des mindestens einen Prothesenbasismoduls, des einen oder der mehreren Retentionsfeldmodule und des einen oder der mehreren Befestigungsmittelmodule kann nach bekannten Verfahren, z. B. durch Gießen, durch selektives Lasersintern, aber auch in einem CAD-CAM-Fräsverfahren oder 3D-Druck erfolgen. Besonders bei letzterem Herstellungsverfahren ergibt sich als besonderer Vorteil, dass die Gesamthöhe des Fräsblocks erheblich, insbesondere um ca. 50 % gegenüber einer nicht modularen Herstellung, verringert werden kann, da die Einzelmodule nicht bereits beim Herausfräsen in der zueinander vorgesehenen Stellung und/oder Position angeordnet sein müssen. So ist es beispielsweise auch denkbar aus einem Fräsblock eine Art von Einzelmodulen, bspw. Befestigungsmodule und aus einem anderen Fräsblock eine andere Art von Einzelmodulen, bspw. Prothesenmodule und/oder Retentionsmodule herauszufräsen, wodurch die Gesamthöhe des Fräsblocks und der Materialverbrauch weiter gesenkt werden, aber auch erforderliche Einzelteile zeitgleich angefertigt werden können, wodurch wiederum die Produktionszeiten sinken. Die Ermittlung der Einschubachse kann über dem Fachmann bekannte Methoden erfolgen, bspw. manuell am physikalischen Arbeitsmodell mithilfe eines Parallelometers oder aber softwaregestützt, z.B. durch Erstellen eines virtuellen Arbeitsmodells. Die Ausrichtmittel können dann anhand der ermittelten Einschubachse derart ausgebildet werden, dass die Einzelmodule mittels der Ausrichtelemente in der der Einschubachse entsprechenden Stellung und/oder Position zueinander ausrichtbar sind. Die Einschubachse berücksichtigt den gesamten Restzahnbestand, Kronen und Implantate des Gebisses, um präzise Unterschnitte am jeweiligen Zahnäquator zu definieren.

Insgesamt wird mit der erfindungsgemäßen Lösung ein Zahnprothesensystem bereitgestellt, welches aufgrund von kürzeren Maschinenfertigungszeiten und geringerem Materialaufwand kostengünstig maschinell herstellbar ist. Auch der Arbeitsaufwand und die Schwierigkeit der durchzuführenden Anpassungen für den Zahntechniker lassen sich durch den modularen Aufbau erheblich reduzieren, weshalb die Herstellungskosten weiter sinken. Der modulare Aufbau ermöglicht außerdem das Zahnprothesensystem z. B. durch den Zahnarzt direkt am Patienten anzupassen. Weiterhin können die fortwährend auftretenden Spannungen, welche durch die Herstellung z. B. einer Modellgussbasis oder aufgrund der Klammern und/oder Auflagen entstehen vermieden werden, sodass bei der Eingliederung am Patienten ein spannungsfrei sitzender Zahnersatz gewährleistet wird. Die höchste Präzision bei der Herstellung von Zahnersatz erreicht man, wenn die Möglichkeit gegeben ist, die Bauteile direkt im Mund und unter Berücksichtigung der Eigenbeweglichkeit der Zähne sowie der Schleimhautresilienz, spannungsfrei zusammenzufügen. Erfindungsgemäß steht diese Möglichkeit dem behandelnden Zahnarzt zur Verfügung, indem die Befestigungsmittel getrennt von der Modellgussbasis überprüft werden können. Folglich können Passungsfehler sehr schnell lokalisiert und beseitigt werden. Damit bietet die erfinderische Lösung dem Behandler erstmalig eine schnelle und präzise Vorgehensweise.

Vorteilhafte Ausführungsformen sind in den Unteransprüchen beansprucht und werden nachfolgend näher erläutert.

So können gemäß einer beispielhaften Ausführung der Erfindung das eine oder die mehreren Retentionsfeldmodule mindestens ein Retentionsfeld zur Verbindung mit dem Zahnersatz und/oder das eine oder die mehreren Befestigungsmittelmodule mindestens ein Befestigungsmittel zur Befestigung des Zahnprothesensystems an der Restbezahnung eines Patienten aufweisen.

Insbesondere sind das eine oder die mehreren Retentionsfeldmodule und das eine oder die mehreren Befestigungsmittelmodule jeweils einstückig mit dem mindestens einen Retentionsfeld bzw. dem mindestens einen Befestigungsmittel ausgebildet.

Zweckmäßigerweise ist es denkbar, ein Retentionsfeldmodul einstückig mit einem Retentionsfeld, welches als Bewehrung oder Armierung für den Zahnersatz dient und/oder ein Befestigungsmittelmodul einstückig mit einem Befestigungsmittel, bspw. einer Klammer zum Umgreifen eines Zahns und/oder einer Auflage zum Abstützen auf einer Zahnoberfläche und/oder einer Gegenlagerklammer zu gießen oder zu fräsen.

Je nach Zustand der Restbezahnung des Patienten, insbesondere abhängig von der Anzahl und der Position der zur Befestigung des Prothesensystems verwendbaren Zähne kann es nach einer alternativen oder optionalen Erfindungsvariante ebenso vorteilhaft sein, dass das eine oder die mehreren Retentionsfeldmodule sowohl mindestens ein Retentionsfeld zur Verbindung mit dem Zahnersatz als auch mindestens ein Befestigungsmittel zur Befestigung des Zahnprothesensystems an der Restbezahnung des Patienten aufweisen.

Sofern gewünscht kann durch Ausbildung eines Retentionsfeldmoduls, welches zusätzlich zum Retentionsfeld außerdem noch ein Befestigungsmittel aufweist, die Gesamtanzahl der Einzelmodule reduziert werden. Besonders vorteilhaft ist dies auch an Positionen im Mundraum des Patienten die verhältnismäßig wenig Raum für die Zahnprothese bereithalten. Ebenfalls denkbar ist nach einer anderen Erfindungsausgestaltung auch, das Prothesenbasismodul selbst mit einem Retentionsfeld auszubilden.

In vorteilhafter Ausführung der Erfindung weisen die Ausrichtmittel jeweils ein Einschubteil und eine komplementär dazu ausgebildete Führungsaufnahme auf, wobei das Einschubteil von der Führungsaufnahme in eine Endposition geführt und dort aufgenommen wird.

Das Einschubteil und die Führungsaufnahme sind, insbesondere einstückig, an jeweils einem Einzelmodul ausgebildet und bilden miteinander eine schienenartige Führung, die die beiden Einzelmodule in eine festgelgte Endposition überführt. In dieser Endposition befinden sich die beiden Einzelmodule in der zueinander vorgesehenen Stellung und/oder Position, sodass das aus der Gesamtheit aller Einzelmodule gebildete Prothesensystem entlang der zuvor festgelegten und/oder bestimmten Einschubachse im Restgebiss des Patienten befestigbar ist. Vorzugsweise sind die jeweiligen Einschubteile geometrisch identisch ausgebildet, die gewünschte Endposition zur Ausrichtung in der vorgesehenen Stellung und/oder Position wird durch die Geometrie der Führungsaufnahme vorgegeben.

Für die praktische Verwendung des Zahnprothesensystems, also bspw. wenn der Patient mit eingesetzter Prothese kaut, ist es gemäß einer Weiterbildung dieser Ausführungsvariante zweckmäßig, dass das Einschubteil innerhalb der Führungsaufnahme in der Endposition mit einem Lagerspiel, insbesondere mit einem Lagerspiel in einem Bereich zwischen 0,01 mm und 5,0 mm gelagert ist.

Auch die natürlichen Zähne sind nicht starr im Kieferknochen verankert, sondern verfügen ebenfalls über ein gewisses Spiel um beim Kauen auftretende Kräfte und Belastungen besser aufnehmen und ausgleichen zu können. Dieses natürliche Zahnspiel lässt sich zweckmäßig mit einem Lagerspiel zwischen Einschubteil und Führungsaufnahme nachbilden. Zu diesem Zweck kann das Lagerspiel, bevor das Befestigungsmittel angebracht wird, mit einem elastischen Werkstoff, insbesondere Silikon befüllt werden. Andererseits dient das Lagerspiel dazu, die bei den unterschiedlichen Herstellungsverfahren auftretenden Ungenauigkeiten und Toleranzen auszugleichen.

In Weiterbildung ist es vorteilhaft, dass das mindestens eine Prothesenbasismodul und/oder das eine oder die mehreren Retentionsfeldmodule und/oder das eine oder die mehreren Befestigungsmittelmodule jeweils mindestens ein Einschubteil aufweisen und mindestens ein Retentionsfeldmodul eine oder mehrere Führungsaufnahmen aufweist.

In dieser beispielhaften Erfindungsausgestaltung sind die Führungsaufnahmen ausschließlich an den Retentionsfeldmodulen ausgebildet, deren Retentionsfelder auf den Kieferkamm des Patienten aufliegen. Das sich an den Gaumen anpassende Prothesenbasismodul sowie die mit Befestigungsmitteln, bspw. mit Klammern und/oder Auflagen ausgebildeten Befestigungsmittelmodule weisen jeweils mindestens ein Einschubteil auf und können zur gewünschten Ausrichtung entlang der Einschubachse in die Führungsaufnahmen der Retentionsfeldmodule eingeführt werden. Auf diese Weise können die entlang des Kieferkamms verlaufenden Retentionsfelder bzw. Retentionsfeldmodule einen Bezug bzw. den Ausgangspunkt zur Ausrichtung der Einzelmodule des Prothesensystems bilden. Natürlich können alternativ auch Führungsaufnahmen an dem Prothesenbasismodul und/oder an den Befestiungsmittelmodulen vorgesehen sein.

Beispielsweise kann nach einer Erfindungsvariante dann das eine oder die mehreren Befestigungsmittelmodule mittelbar über ein Retentionsfeld oder über ein Retentionsfeldmodul mit dem Prothesenbasismodul verbunden oder verbindbar sein.

Während die Ausrichtmittel des Zahnprothesensystems zur Ausrichtung der Einzelmodule vorgesehen sind, ist gemäß einer bevorzugten Erfindungsausgestaltung zur Verbindung der Einzelmodule miteinander eigens ein Verbindungsmittel vorgesehen, über welches das mindestens eine Prothesenbasismodul, das eine oder die mehreren Retentionsfeldmodule sowie das eine oder die mehreren Befestigungsmittelmodule lösbar miteinander verbunden oder verbindbar sind.

Durch diese Ausgestaltung können die Funktionen, Ausrichten der Einzelmodule zueinander sowie Verbinden der Einzelmodule miteinander, separat von abweichenden Mitteln übernommen werden. Dies ermöglicht eine insgesamt höhere Flexibilität bei der Herstellung des Zahnprothesensystems und eine exaktere Ausrichtung der Einzelmodule zueinander, da die Ausrichtmittel keine Verbindungsfunktion aufweisen müssen.

Indem die Verbindung lösbar ausgestaltet ist, kann das Zahnprothesensystem z. B. bei Verlust eines zur Befestigung vorgesehenen Restzahnes und/oder bei Beschädigung, beliebig und mit nur geringem Aufwand durch ein "Ersatzmodul" erweitert werden bzw. repariert werden. So ist bspw. denkbar, ein Befestigungsmittelmodul bei Verlust des zugehörigen Restzahns über die lösbare Verbindung gegen ein Retentionsfeldmodul als Basis für den an dieser Stelle erforderlich gewordenen Zahnersatz auszutauschen. Die korrekte Ausrichtung, d.h. Stellung und/oder Position des Ersatzmoduls, in diesem Beispiel des Retentionsfeldmoduls, zu den bereits vorhandenen Einzelmodulen, z. B. zu einem angrenzenden, anderen Retentionsfeldmodul und dem Prothesenbasismodul, wird wiederum über das Ausrichtmittel sichergestellt. Insbesondere wird ein Einschubteil des Ersatzmoduls in eine Führungsaufnahme eines angrenzenden Einzelmoduls, z. B. eines angrenzenden Retentionsfeldmoduls, eingeführt. Die digitalen Verarbeitungssysteme (z.B. CAD-CAM, SLM oder 3D-Drucker) können heutzutage die geometrischen Daten der Einschubteile und Führungsaufnahmen in die bestehende Software implementieren. Somit lassen sich mit einfacher digitaler Handhabung die gewünschten Befestigungsmittel mit Einschubteilen und Führungsaufnahmen inklusive aller Retentionsfelder für neue Prothesenzähne wunschgemäß dimensionieren. Für händische Verfahren können die gewohnten Arbeitsprozesse durch vorgefertigte Einschubteile, Führungsaufnahmen und/oder Retentionsfelder, beibehalten werden.

Im Stand der Technik und für die Erfindung nutzbar, ist es bekannt derart lösbare Verbindungen durch Spezialkleber, Lasern, Löten, Matrize und Patrize-Geschiebeverbindungen sowie Raster- und Einschubsysteme oder aber Verbindungen auf Basis von Adhäsions- und Reibungskräften, wie jene nach dem bekannten Teleskop- und Konuskronenprinzip auszuführen.

Gemäß einer Ausgestaltung der Erfindung ist es aber vorteilhaft, dass das Verbindungsmittel einen gieß- und formfähigen Kunststoff, insbesondere ein fließfähiges Kaltpolymerisat umfasst.

Zur Verbindung kann das Verbindungsmittel um bzw. in die durch die Ausrichtmittel zueinander ausgerichteten Einzelmodule gegossen werden, wodurch bei Erstarren eine formschlüssige, jedoch keine stoffschlüssige Verbindung entsteht. Hierbei ist besonders vorteilhaft, dass das Verbindungsmittel im gleichen Arbeitsschritt auch zur Ausbildung des Zahnersatzes verwendet werden kann, anders ausgedrückt ist der Zahnersatz, insbesondere der Prothesensattel, nach einer besonderes zweckmäßigen Erfindungsvariante in ein und demselben Arbeitsschritt gemeinsam und einteilig mit dem Verbindungsmittel gießbar.

Ein derart zwischen dem mindestens einen Prothesenbasismodul, dem einen oder den mehreren Retentionsfeldmodulen sowie dem einen oder den mehreren Befestigungsmittelmodulen gegossenes Verbindungsmittel ist in vorteilhafter Weiterentwicklung dieser Erfindungsvariante durch Erwärmung des Verbindungsmittels lösbar.

Durch, insbesondere lokale Erwärmung geht das Verbindungsmittel in einen weichen bzw. flexiblen Zustand über, welcher es ermöglicht, das Ausrichtmittel, insbesondere ein Einschubteil eines Einzelmoduls aus einer Führungsaufnahme eines anderen Einzelmoduls beschädigungsfrei "herauszuziehen" und das Einzelmodul durch ein anderes Einzelmodul, ein Ersatzmodul zu ersetzen. "Erweicht" wird hierzu nur das Verbindungsmittel, sodass die Ausrichtmittel unbeschädigt und mit unveränderter Geometrie erhalten bleiben, wodurch eine Ausrichtung entlang der Einschubachse, auch des Ersatzmoduls, bei Reparatur und/oder Erweiterung der Zahnprothese garantiert wird. Die zur Erwärmung des Verbindungsmittels erforderliche Temperatur ist wesentlich geringer, als z. B. beim Löten, sodass auch eine Beschädigung zum Ort der Temperatureinwirkung weiter beabstandeten Zahnersatzes durch Hitzeeinwirkung vermieden wird.

Bei einer ebenso vorteilhaften Variante der Erfindung weist das Ausrichtmittel, insbesondere ein Einschubteil des Ausrichtmittels, zwei Werkstoffe auf, insbesondere weisen die Werkstoffe voneinander abweichende Federhärten und/oder Farbeigenschaften und/oder Schmelzeigenschaften auf.

Vorzugsweise ist bei dieser Variante das Einschubteil oder Befestigungsmittel zweiteilig ausgebildet. Somit ist es erstmalig möglich einen höchstmöglichen Anpressdruck des Befestigungsmittels aus einem der Einschubteile oder Befestigungsmittel, bestehend z. B. aus einer Chrom-Cobalt-Molybdän-Legierung, zu generieren. Darüber hinaus kann im Frontzahnbereich aus ästhetischen Gründen der sichtbare Abschnitt des Einschubteils sowie des Befestigungsmittels aus einem z.B. weißen bzw. zahnfarbigen Hochleistungskunststoff oder einer Hochleistungskeramik oder aus Gold hergestellt werden. In diesem Zusammenhang spricht man von einem Hybrideinschubteil und/oder Hybridbefestigungsmittel.

Aufgrund der Geometrie des Hybrideinschubteils und/oder Hybridbefestigungsmittels lassen sich vorteilig Hochleistungskeramikbefestigungsmittel mit Glaslot in einem Standard-Dentalbrennofen verlöten, ohne dass sich die Prothesenbasismodule verziehen oder oxidieren.

Dieser Variante ebenfalls zu Grunde liegend ist der Vorteil, dass erstmals höhere Federhärten nur im Einschubteil z.B. durch Härteverfahren eingestellt werden können, ohne das Prothesenbasismodul erneut zu verziehen oder zu oxidieren. Auf Grund der äußerst geringen Materialmenge der zweiteiligen Einschubteile sowie Führungsaufnahmen und/oder Befestigungsmittel sind Materialkosten auch bei Gold nahezu irrelevant.

Schließlich weist gemäß einer weiteren Erfindungsvariante das Ausrichtmittel, insbesondere ein Einschubteil des Ausrichtmittels, und/oder das Befestigungsmittel ein Federkraftmittel auf.

Vorzugsweise dient das Federkraftmodul als Federarm für das Befestigungsmittel, sodass dessen Anpressdruck auf einen Restzahn oder ein Implantat bzw. eine Krone des Patienten beim Einsetzen und Herausnehmen der Prothese, was üblicherweise mehrmals täglich, insbesondere zur Reinigung erforderlich ist, gleichmäßig über die gesamte Klammerauflagefläche verteilt wird. Hierdurch lässt sich der, auch durch Kaubewegungen verursachte Abrieb am Restzahn/Implantat/Krone, wesentlich verringern und die Haltekraft erhöhen.

Bei als Klammern ausgebildeten Befestigungsmitteln, wie sie im Stand der Technik bekannt sind, konzentriert sich der auf den Restzahn einwirkende Anpressdruck üblicherweise auf einen nur kleinen Abschnitt eines Klammerarms, die sogenannte Klammerspitze, deren Auflagefläche unterhalb des Zahnäquators am Restzahn anliegt. Beim Einsetzen der Prothese besitzen lediglich diese Klammerspitzen ein geringes Bewegungsspiel, um das Befestigungsmittel über den Zahnäquator schieben zu können. Die übrigen Bereiche der Klammer sind starr. Dies führt zu punktuellem Abrieb durch die verhältnismäßig kleine Auflagefläche bzw. Reibfläche der Klammerspitze am Restzahn, wodurch der Zahnhalteapparat auf Dauer erheblich geschädigt wird.

Konkret ist diese Erfindungsvariante daher besonders vorteilhaft, wenn das Befestigungsmittel als Klammer ausgebildet ist und dessen Befestigungsmittelarm und/oder ein an den Befestigungsmittelarm anschließendes Einschubteil mit dem Federkraftmittel versehen ist, wobei das Federkraftmittel einen Federschlitz und eine Federbohrung umfasst, deren Geometrie die gewünschte Federhärte festlegen. In dieser Ausführung sind dann ein erster Klammerarm und ein zweiter Klammerarm durch das Federkraftmittel, insbesondere den Federschlitz und die Federbohrung zueinander beweglich federnd ausgebildet, wodurch sich insbesondere der Anpressdruck gleichmäßig über die gesamte Auflagefläche verteilen lässt. Vorzugsweise können der erste Klammerarm und der zweite Klammerarm hierdurch beim Einsetzen und Herausnehmen der Zahnprothese zangenartig in der Zahnäquatorebene "aufgefedert", und so der Abrieb minimiert wird.

Die eingangs gestellte Aufgabe wird außerdem durch ein Verfahren zur Herstellung und/oder Erweiterung eines Zahnprothesensystems gemäß Anspruch 13 gelöst.

Erfindungsgemäß kennzeichnet sich ein solches Verfahren dadurch, dass in einem ersten Verfahrensschritt die das Zahnprothesensystem ausbildenden Einzelmodule, mindestens ein Prothesenbasismodul, insbesondere eine Oberkieferplatte oder ein Unterkieferbügel, ein oder mehrere Retentionsfeldmodule zur Verbindung mit Zahnersatz und/oder ein oder mehrere Befestigungsmittelmodule zur Befestigung des Zahnprothesensystems an der Restbezahnung, insbesondere auch an noch nicht vorhandenen, planbaren Implantaten und/oder Kronen, eines Patienten festgelegt werden.

Üblicherweise wird hierzu ein virtuelles oder physikalisches Modell der Mundsituation, d. h. der Kiefer- und Gaumengeometrie sowie des Restzahnbestands des Patienten erstellt und anhand des Modells die erforderlichen Einzelmodule ermittelt. Das Zahnprothesensystem sollte dabei mindestens ein Prothesenbasismodul und ein Retentionsfeldmodul mit Retentionsfeld und Befestigungsmittel oder alternativ mindestens ein Prothesenbasismodul, ein Retentionsfeldmodul mit Retentionsfeld und ein Befestigungsmittelmodul mit Befestigungsmittel umfassen.

Unter Einbeziehung der erforderlichen Einzelmodule sowie der Mundsituation des Patienten wird eine mögliche Einschubachse entlang derer das Zahnprothesensystem in die Restbezahnung des Patienten einschiebbar und an dieser befestigbar ist ermittelt.

Auch die Einschubachse kann nach bekannten Methoden manuell oder softwaregestützt ermittelt werden. Beispielsweise erfolgt die Bestimmung einer möglichen Einschubachse entweder durch Software oder durch Zusammensetzen der Einzelteile am Gipsmodell oder im Gebiss des Patienten. Aus der ermittelten Einschubachse ergibt sich wiederum auch eine Ausrichtung der Einzelmodule, d. h. deren Stellung und/oder Position zueinander. Mit diesem Verfahren lässt sich erstmalig eine Modellgussprothese, auch als Klammerprothese bezeichnet, zu einem Implantgetragenen Zahnersatz erweitern. Unter einem Implantatgetragenem Zahnersatz versteht man Zahnersatz, insbesondere prothetischen Zahnersatz, der an Implantaten befestigt wird.

Die der Einschubachse entsprechende Stellung und/oder Position des mindestens einen Prothesenbasismoduls, des einen oder der mehreren Retentionsfeldmodule sowie des einen oder der mehrere Befestigungsmittelmodule zueinander, wird jeweils mittels Ausrichtmitteln vorgegeben.

Die erforderlichen Einzelmodule, d. h. das mindestens eine Prothesenbasismodul, das eine oder die mehreren Retentionsfeldmodule sowie das eine oder die mehreren Befestigungsmittelmodule werden vorzugsweise nach einem der aus dem Stand der Technik bekannten Verfahren, entweder mit einem digitalen Verarbeitungssystem (z.B. CAD-CAM, SLM oder 3D-Drucker) oder händisch hergestellt, insbesondere gefräst oder gegossen. Besonders vorteilhaft ist es, wenn auch die Ausrichtmittel einstückig und somit gleichzeitig mit den entsprechenden Einzelmodulen hergestellt werden.

Abschließend werden die in der der Einschubachse entsprechenden und von den Ausrichtmitteln vorgegebenen Stellung und/oder Position ausgerichteten Einzelmodule, das mindestens eine Prothesenbasismodul, das eine oder die mehreren Retentionsfeldmodule sowie das eine oder die mehreren Befestigungsmittelmodule mittels eines Verbindungsmittels lösbar miteinander verbunden.

Nach einer vorteilhaften Verfahrensvariante umfasst das Verbindungsmittel einen guss- und formfähigen Kunststoff, insbesondere ein fließfähiges Kaltpolymerisat und wird zur Verbindung des mindestens eine Prothesenbasismoduls, des einen oder der mehreren Retentionsfeldmodule sowie des einen oder der mehreren Befestigungsmittelmodule und gleichzeitig zur Ausbildung des Zahnersatzes gegossen.

Vorteilhafterweise umfasst das Verbindungsmittel also dasselbe Material wie der Zahnersatz, sodass sowohl Verbindungsmittel, als auch Zahnersatz zeitgleich in einem einzigen Arbeitsschritt gegossen werden können.

Zur Erweiterung und/oder zur Reparatur des Zahnprothesensystems werden ein oder mehrere zur Erweiterung und/oder zum Austausch vorgesehene Ersatzmodule, wie Prothesenbasismodule und/oder Retentionsfeldmodule und/oder Befestigungsmittelmodule vorgesehen, deren Stellung und/oder Position zueinander und zu den übrigen Einzelmodulen, wie Prothesenbasismodulen und/oder Retentionsfeldmodulen und/oder Befestigungsmittelmodulen anhand einer Einschubachse festgelegt und durch Ausrichtmittel vorgegeben wird.

Wahlweise können etwaige Ersatzmodule direkt im ersten Verfahrensschritt bei der Planung und Festlegung der ursprünglichen, die Zahnprothese bildenden Einzelmodule vorgesehen und deren Stellung und/oder Position entsprechend der Einschubachse mittels der Ausrichtmittel vorgegebene werden. Dies betrifft vor allem auszutauschende Einzelmodule im Falle eines Defekts oder eine Beschädigung, die vorzugsweise durch ein identisches Ersatzmodul ausgetauscht werden. Natürlich können aber auch Erweiterungen, die z. B. bei Verlust eines zur Verankerung genutzten natürlichen Zahns ein weiteres Retentionsfeld zur Verbindung mit einem den Zahn ersetzenden Zahnersatz unmittelbar im Verfahrensschritt vorgesehen werden. Alternativ oder auch zusätzlich kann anhand der z. B. durch Ausfall eines natürlichen Zahns veränderten Kiefer- und Gaumengeometrie des Patienten erneut bestimmt bzw. nachgeprüft oder aber eine neue Einschubachse festgelegt werden.

Zum Austausch einzelner Einzelmodule, insbesondere zur Erweiterung und/oder zur Reparatur des Zahnprothesensystems wird nach einer Verfahrensvariante die Verbindung zwischen dem mindestens einen Prothesenbasismodul, dem einen oder den mehreren Retentionsfeldmodulen und/oder dem einen oder den mehreren Befestigungsmittelmodulen durch Erwärmen gelöst und das mindestens eine Prothesenbasismodul, das eine oder die mehreren Retentionsfeldmodule und/oder das eine oder die mehreren Befestigungsmittelmodule durch ein oder mehrere zur Erweiterung oder zum Austausch vorgesehene Prothesenbasismodule und/oder Retentionsfeldmodule und/oder Befestigungsmittelmodule Modul ausgetauscht werden.

Indem das Verbindungsmittel, insbesondere lokal erwärmt wird, kann dieses in einen weichen bzw. flexiblen Zustand überführt werden, welcher es ermöglicht, das Ausrichtmittel, insbesondere ein Einschubteil eines Einzelmoduls aus einer Führungsaufnahme eines anderen Einzelmoduls beschädigungsfrei "herauszuziehen". Im Anschluss kann das entfernte Einzelmodul durch ein gleiches oder ein anderes Einzelmodul, ein Ersatzmodul ersetzt werden. "Erweicht" wird hierzu nur das Verbindungsmittel, sodass die Ausrichtmittel unbeschädigt und mit unveränderter Geometrie erhalten bleiben, wodurch eine Ausrichtung entlang der Einschubachse, auch des Ersatzmoduls, bei Reparatur und/oder Erweiterung des Zahnprothesensystems garantiert wird. Die zur Erwärmung des Verbindungsmittels erforderliche Temperatur ist wesentlich geringer, als z. B. beim Löten, sodass auch eine Beschädigung des zum Ort der Temperatureinwirkung weiter beabstandeten Zahnersatzes durch Hitzeeinwirkung vermieden wird.

Eine lokal begrenzte Erwärmung des Verbindungsmittels kann vorteilhaft über das Befestigungsmittel selbst, insbesondere eine Klammer, welches als elektrischer Widerstand ausgebildet ist und sich durch Anlegen eines Stroms erwärmt realisiert werden. Auf diese Weise wird lediglich der Bereich des unmittelbar angrenzenden Verbindungsmittels erweicht, wodurch das Ausrichtmittel entnehmbar ist, jedoch Verformungen in anderen Bereichen des Verbindungsmittels verhindert werden. Alternativ kann die lokale Erwärmung auch mit einer Lötkolbenzange oder einem Wasserstoffbrenner erfolgen.

Weitere Einzelheiten, Merkmale, Merkmals(unter)-kombinationen, Vorteile und Wirkungen auf der Basis der Erfindung ergeben sich aus der nachfolgenden Beschreibung bevorzugter Ausführungsbeispiele der Erfindung und den Zeichnungen. Diese zeigen in
Fig. 1 eine schematische Draufsicht einer ersten beispielhaften Ausführungsform eines erfindungsgemäßen Zahnprothesensystems,
Fig. 2 eine schematisch perspektivische Seitenansicht einer zweiten beispielhaften Ausführungsform eines erfindungsgemäßen Zahnprothesensystems mit einem Retentionsfeldmodul und einem Befestigungsmittelmodul,
Fig. 3 eine schematisch perspektivische Seitenansicht einer beispielhaften Ausführungsform eines erfindungsgemäßen Zahnprothesensystems mit einem Retentionsfeldmodul und einem Befestigungsmittelmodul, wobei letzteres ein zweiteiliges Befestigungsmittel aufweist,
Fig. 4 eine schematische Draufsicht einer beispielhaften Ausführungsform eines erfindungsgemäßen Zahnprothesensystems mit einem zweiteiligen Befestigungsmittelmodul,
Fig. 5 eine schematische Seitenansicht einer beispielhaften Ausführungsform des erfindungsgemäßen Prothesensystems in einer Grundausführung,
Fig. 6 eine schematische Draufsicht der beispielhaften Ausführungsform eines erfindungsgemäßen Zahnprothesensystems gemäß Figur 5,
Fig. 7 eine schematische Seitenansicht der beispielhaften Ausführungsform eines erfindungsgemäßen Zahnprothesensystems gemäß Figur 5 in einer ersten optionalen Erweiterungsausführung,
Fig. 8 eine schematische Seitenansicht der beispielhaften Ausführungsform eines erfindungsgemäßen Zahnprothesensystems gemäß Figur 5 in einer zweiten optionalen Erweiterungsausführung,
Fig. 9 ein Flussdiagramm eines beispielhaften Ablaufs des erfindungsgemäßen Verfahrens,
Fig. 10 eine schematische Draufsicht einer dritten beispielhaften Ausführungsform eines erfindungsgemäßen Zahnprothesensystems,
Fig. 11 eine schematische Draufsicht einer vierten beispielhaften Ausführungsform eines erfindungsgemäßen Zahnprothesensystems,
Fig. 12 eine schematische Draufsicht einer ersten beispielhaften Ausführungsform eines Ausrichtmittels für ein erfindungsgemäßes Zahnprothesensystem,
Fig. 13 eine Schnittansicht der beispielhaften Ausführungsform aus Figur 12,
Fig. 14 einen schematischen Teilschnitt in Seitenansicht einer zweiten beispielhaften Ausführungsform eines Ausrichtmittels für ein erfindungsgemäßes Zahnprothesensystem,
Fig. 15 einen schematischen Teilschnitt in Seitenansicht einer ersten beispielhaften Ausführungsform eines Verbindungsmittels für ein erfindungsgemäßes Zahnprothesensystem,
Fig. 16 einen schematischen Teilschnitt in Seitenansicht einer zweiten beispielhaften Ausführungsform eines Verbindungsmittels für ein erfindungsgemäßes Zahnprothesensystem,
Fig. 17 einen schematischen Teilschnitt in Seitenansicht einer dritten beispielhaften Ausführungsform eines Verbindungsmittels für ein erfindungsgemäßes Zahnprothesensystem,
Fig. 18 eine schematische Draufsicht einer ersten beispielhaften Ausführungsform eines Federkraftmittels für ein Befestigungsmittel und
Fig. 19 eine schematische Draufsicht einer zweiten beispielhaften Ausführungsform eines Federkraftmittels für ein Befestigungsmittel.

Die Figuren sind lediglich beispielhafter Natur und dienen nur dem Verständnis der Erfindung. Die gleichen Elemente sind mit denselben Bezugszeichen versehen und werden daher nicht in jeder Figur in aller Ausführlichkeit beschrieben.

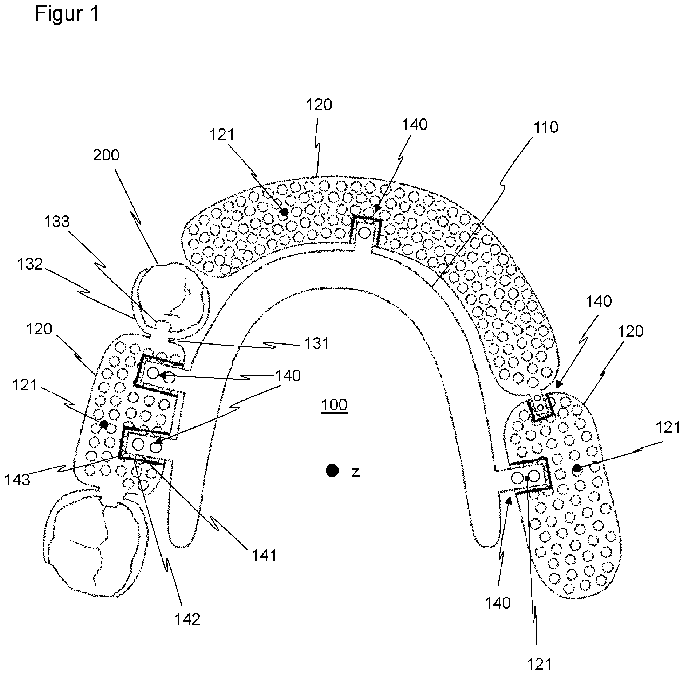

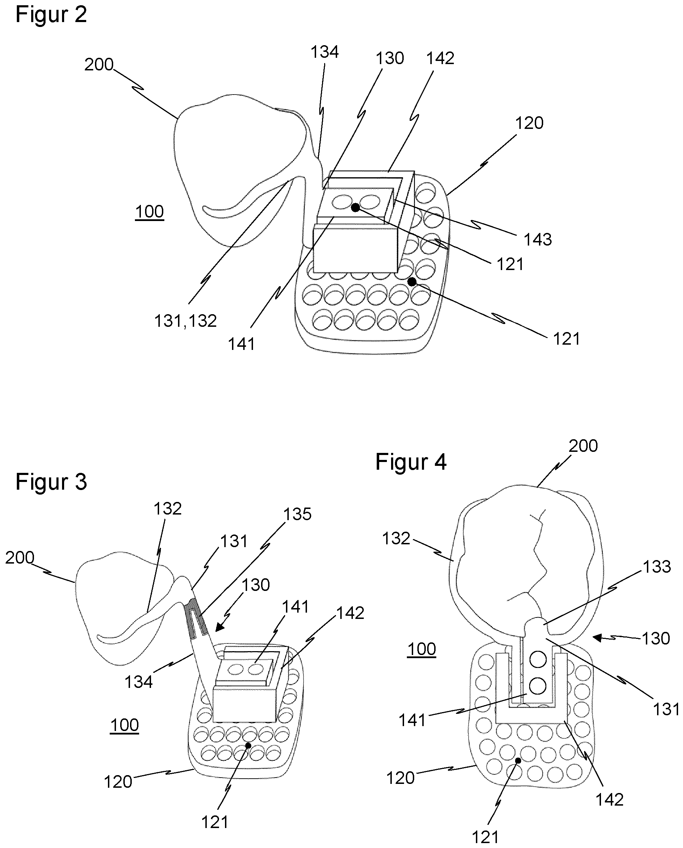

Figur 1 zeigt eine schematische Draufsicht einer beispielhaften Ausführungsform eines erfindungsgemäßen Zahnprothesensystems 100, welches an einer beispielhaften Restbezahnung 200 eines Patienten befestigt dargestellt ist. Die Restbezahnung 200 ist Teil des Unterkiefers, wobei im linken Backenzahnbereich zwei Zähne zur Verankerung des Zahnprothesensystems 100 dargestellt sind. Das Zahnprothesensystem 100 umfasst in dieser Ausführungsform ein Prothesenbasismodul 110 sowie drei Retentionsfeldmodule 120, die jeweils als Einzelmodule voneinander separat ausgebildet sind. Das Prothesenbasismodul 110 schmiegt sich an den Gaumen des Patienten an und ist hier als Unterkieferbügel ausgebildet. Die Retentionsfeldmodule 120 weisen jeweils ein, hier in der Art einer Lochplatte ausgebildetes Retentionsfeld 121 auf, das auf dem Kieferkamm des Patienten aufliegt und eine Art Armierung oder Bewehrung für den Zahnersatz und den Prothesensattel bildet. Das der Restbezahnung 200 im linken Backenzahnbereich zugeordnete Retentionsfeldmodul 120 verfügt zusätzlich über zwei, jeweils an der Restbezahnung 200 des Patienten befestigbare und hier auch befestigt dargestellte Befestigungsmittel 131 mit denen es vorzugsweise einstückig ausgebildet ist. Alternativ und in der Figur 2 dargestellt, ist es auch zweckmäßig, die Befestigungsmittel 131, insbesondere einstückig, an einem separat ausgebildeten Einzelmodul, einem Befestigungsmittelmodul 130 vorzusehen. Die Befestigungsmittel 131 umfassen hier jeweils eine Klammer 131, die die Restbezahnung 200 umgreift sowie eine Auflage 133, die sich auf einer Zahnoberfläche 211 der Restbezahnung 200 abstützt. Alternativ kann ein Befestigungsmittel 131 auch keine, zwei oder mehr Klammern 132 und/oder keine, zwei oder mehr Auflagen 133 umfassen.

Die Einzelmodule, in dieser Ausführung das Prothesenbasismodul 110 sowie die drei Retentionsfeldmodule 120 verfügen jeweils über Ausrichtmittel 140, die das Prothesenbasismodul 110 sowie die drei Retentionsfeldmodule 120 in einer zueinander vorgegebenen Stellung und/oder Position, die der Einschubachse z des Zahnprothesensystems 100 entspricht, ausrichten. Die Einschubachse z wird anhand der Äquatorialebene sowie der Hinterschnitttiefen der Restbezahnung 200 ermittelt und ist in der Figur 1 beispielhaft senkrecht in die Zeichenebene hineinweisend dargestellt. Ein Ausrichtmittel 140 umfasst jeweils ein Einschubteil 141 sowie eine komplementär dazu ausgebildete Führungsaufnahme 142. Das Einschubteil 141 ist, insbesondere einstückig, an einem Einzelmodul ausgebildet und die Führungsaufnahme 142, insbesondere einstückig, an einem andern Einzelmodul, wobei das Einschubteil 141 und die Führungsaufnahme 142 miteinander eine schienenartige Führung, die die beiden Einzelmodule in eine festgelegte Endposition überführt ausbilden, sodass diese in der vorgesehenen Stellung und/oder Position zueinander ausgerichtet sind. Auch die Einschubteile 141 können jeweils ein Retentionsfeld 121 aufweisen. Gemäß der in der Figur 1 gezeigten Ausführungsform ist das Prothesenbasismodul 110 ausschließlich mit, insgesamt vier Einschubteilen 141 einstückig verbunden. Das der Restbezahnung 200 zugeordnete Retentionsfeldmodul 120 weist zwei Führungsaufnahmen 142 auf, die zur geführten Aufnahme von zwei zugeordneten, komplementären Einschubteilen 141 des Prothesenbasismoduls 100 aufgenommen werden. Das dem Schneidezahnbereich zugeordnete Retentionsfeldmodul 120 weist eine Führungsaufnahme 142 zur geführten Aufnahme eines komplementären Einschubteils 141 des Prothesenbasismoduls 110 und ein Einschubteil 141, das von einer komplementären Führungsaufnahme 142 des verbleibenden, dem rechten Backenzahnbereich zugeordneten Retentionsfeldmoduls 120 geführt aufgenommen wird. Schließlich weist dieses Retentionsfeldmodul 120 außerdem eine Führungsaufnahme 142 zur geführten Aufnahme eines komplementär angeordneten Einschubteils 141 des Prothesenbasismoduls 100 auf.

Die Ausrichtmittel 140 sind hier in der die vorgesehene Stellung und/oder Position vorgebenden Endposition dargestellt, d. h. die Einschubteile 141 sind jeweils vollständig in die ihnen zugeordneten Führungsaufnahmen 142 eingeschoben. Zwischen Einschubteil 141 und Führungsaufnahme 142 ist jeweils ein Lagerspiel 143 in einem Bereich zwischen 0,01 mm und 5,0 mm vorgesehen, welches das natürliche Zahnspiel der im Kieferknochen verwurzelten Zähnen imitiert. Zudem können die unterschiedlichen Herstellungsverfahren bedingte Ungenauigkeiten und Toleranzen ausgeglichen werden.

Eine schematisch perspektivische Seitenansicht einer beispielhaften Ausführungsform eines erfindungsgemäßen Zahnprothesensystems 100 ist in der Figur 2 gezeigt. Dargestellt sind ein Retentionsfeldmodul 120 und ein Befestigungsmittelmodul 130, die bspw. mit einem hier nicht gezeigten Prothesenbasismodul 110 ein Zahnprothesensystem 100 bilden. Das Befestigungsmittelmodul 130 ist mit einem Befestigungsmittel 131, hier beispielhaft einer Klammer 132 an einer Restbezahnung 200 eines Patienten befestigt dargestellt. Die Klammer 132 ist über einen Befestigungsmittelarm 134 mit einem Einschubteil 141 verbunden, Klammer 132, Befestigungsmittelarm 134 und Einschubteil 141 sind vorzugswese einstückig ausgebildet. Das Einschubteil 141 weist eine besonders unkompliziert herstellbare, quaderförmige Grundform auf, kann aber alternativ auch in anderen geeigneten geometrischen Formen ausgebildet sein. Um die Befestigung des Zahnersatzes zu vereinfachen ist auch das Einschubteil 141 mit einem Retentionsfeld 121 versehen. Gemeinsam mit einer komplementär zur Grundform des Einschubteils 141 ausgebildeten Führungsaufnahme 142 bildet das Einschubteil 141 das Ausrichtmittel 140 aus. Die Führungsaufnahme 142 ist Bestandteil des Retentionsfeldmoduls 120 und vorzugsweise einstückig der Oberseite von dessen Retentionsfeld 121, d. h. auf der bei eingesetztem Prothesensystem 100 dem Kieferkamm abgewandten Seite, angeordnet. In dieser Darstellung ist die Führungsaufnahme nach oben, d. h. auf der dem Retentionsfeld 121 abgewandten Seite, geöffnet dargestellt. Einschubteil 141 und Führungsaufnahme 142 liegen lose in einer vollständig eingeschobenen Endposition ineinander, wodurch das Befestigungsmittelmodul 130 und das Retentionsfeldmodul 120 in der vorgesehenen, der Einschubachse z entsprechenden Stellung und/oder Position ausgerichtet sind. Zwischen dem passgenau in der Führungsaufnahme 142 sitzenden Einschubteil 141 ist wiederum ein Lagerspiel 143 in einem Bereich von 0,01 mm bis 5,00 mm vorgesehen, um z.B. die durch unterschiedliche Herstellungsverfahren bedingten Ungenauigkeiten und Toleranzen auszugleichen.

Figur 3 zeigt eine schematisch perspektivische Seitenansicht einer ganz ähnlichen beispielhaften Ausführungsform eines erfindungsgemäßen Zahnprothesensystems 100 mit einem Retentionsfeldmodul 120 und einem Befestigungsmittelmodul 130. Gegenüber der in der Figur 2 gezeigten Variante weist das Befestigungsmittelmodul 130 ein zweiteiliges Befestigungsmittel 131, auch als Hybridbefestigungsmittel bezeichnet, auf wobei ein erster Teil eine Befestigungsmittelarm 134 und ein zweiter Teil eine Klammer 132 umfasst. Durch die zweiteilige Ausführung ist es möglich, das Befestigungsmittel 131 zwei unterschiedliche Werkstoffe umfassend auszubilden. Insbesondere können die beiden Werkstoffe voneinander abweichende Federhärten und/oder Farbeigenschaften und/oder Schmelzeigenschaften aufweisen. Die beiden Teile des Befestigungsmittels 131 können z.B. über eine Steckverbindung 135 zueinander ausgerichtet und mittels eines hier nicht sichtbaren Verbindungsmittels 150 miteinander verbunden werden.

Auch die Figur 4 zeigt in schematischer Draufsicht eine beispielhafte Erfindungsausführung eines Zahnprothesensystems 100 mit einem zweiteiligen Befestigungsmittelmodul 130, bei dem sowohl das Befestigungsmittel 131, insbesondere die Klammer 132, als auch das Ausrichtmittel 140, insbesondere das Einschubteil 141, zweiteilig ausgebildet sind.

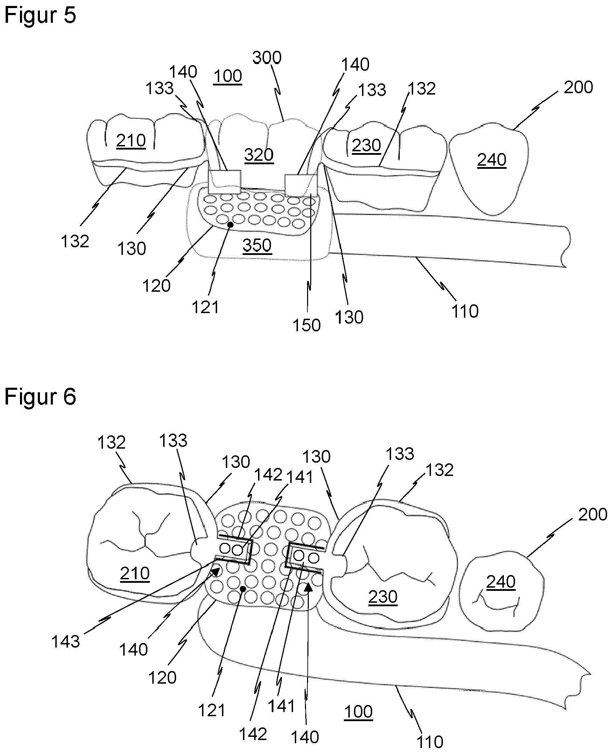

In der Figur 5 ist eine schematische Seitenansicht einer beispielhaften Ausführungsform eines erfindungsgemäßen Prothesensystems 100 in einer Grundausführung dargestellt. Der hier gezeigte Teilabschnitt des Prothesensystems 100 umfasst ein Retentionsfeldmodul 120 sowie zwei Befestigungsmittelmodule 130. In dieser Darstellung beispielhaft umfasst das Retentionsfeldmodul 120, neben dem Retentionsfeld 121, außerdem einen Unterkieferbügel oder ist einstückig mit dem Prothesenbasismodul 110 ausgebildet. Optional ist es auch denkbar, dass das Prothesenbasismodul 110 als separates Einzelmodul ausgebildet ist oder das Prothesenbasismodul 110 ein sich einstückig anschließendes Retentionsfeld 121 aufweist. An der dem Kieferkamm des Patienten abgewandten Oberseite des Retentionsfelds 121 sind zwei Führungsaufnahmen 142 in der bereits beschriebenen quaderförmigen Form ausgebildet. In den Führungsaufnahmen 142 sitzt jeweils ein Einschubteil 141 (siehe Draufsicht aus Figur 6) des jeweiligen Befestigungsmittelmoduls 130. Je eine Führungsaufnahme 142 mit dem darin angeordneten Einschubteil 141 bilden gemeinsam Ausrichtmittel 140. Die beiden Befestigungsmittelmodule 130 sind über Befestigungsmittel 131, jeweils einer Klammer 132 und einer Auflage 133 an der Restbezahnung 200 des Patienten befestigt, wobei eines der Befestigungsmittelmodule 130 an einem ersten Zahn 210 und das andere an einem dritten Zahn 230 der Restbezahnung 200 befestigt ist. Benachbart zu dem dritten Zahn 230 ist ein vierter Zahn 240 der Restbezahnung 200 dargestellt. Der ursprünglich zwischen dem ersten Zahn 210 und dem dritten Zahn 230 liegende zweite Zahn des Patienten ist bereits ausgefallen und wird durch den gestrichelt angedeuteten Zahnersatz 300 ersetzt. An dessen Stelle werden daher ein zweiter Ersatzzahn 320 zusammen mit dem Prothesensattel 350 des Zahnersatzes 300 in das als Armierung oder Bewehrung fungierende Retentionsfeld 121 eingegossen. Gleichzeitig wirken der zweite Ersatzzahn 320 und der Prothesensattel 350 als Verbindungsmittel 150, um das Retentionsfeldmodul 120 mit den die beiden Befestigungsmittelmodulen 130 in der durch die Ausrichtmittel 140 ausgerichteten Stellung und/oder Position zu verbinden.

In der Figur 6 ist die beispielhafte Ausführungsform des erfindungsgemäßen Prothesensystems 100 in einer schematischen Draufsicht gezeigt. Gegenüber der Figur 5 wird auf die gestrichelte Darstellung des Zahnersatzes 300 verzichtet. In der Figur 6 gut zu erkennen ist quaderförmige Ausführung der Führungsaufnahme 142 des Ausrichtmittels 140, die nach oben, d. h. in Richtung der Zahnoberfläche 211 geöffnet ist, wodurch das jeweils zugeordnete Einschubteil 141 von oben einführbar ist. Alternativ ist auch denkbar, die Führungsaufnahme 142 auch an der Oberseite zu schließen und das Einschubteil 141 seitlich einzuführen. In der Endposition liegt das Lagerspiel 143 zwischen Führungsaufnahme 142 und Einschubteil 141 liegt in einem Bereich zwischen 0,01 mm und 5,0 mm.

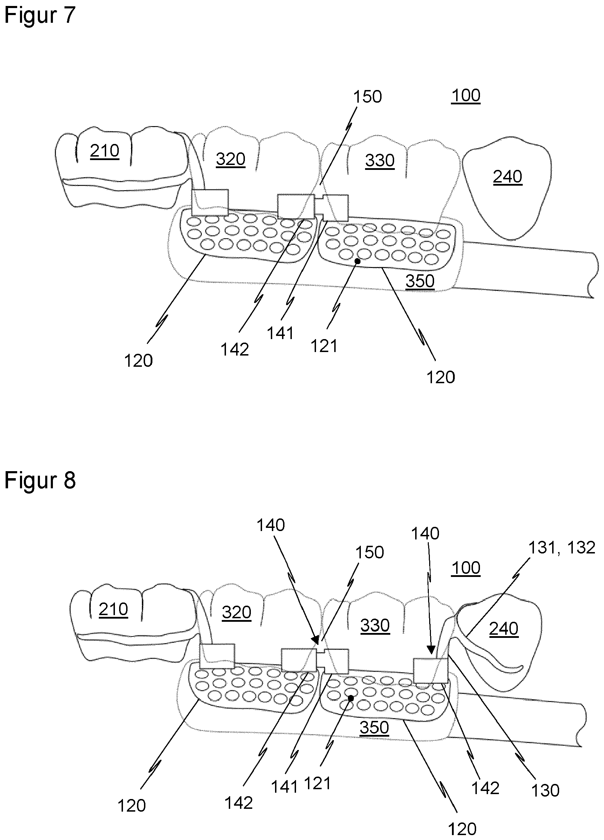

Die beispielhafte Ausführungsform eines erfindungsgemäßen Zahnprothesensystems 100 gemäß Figur 5 ist in der Figur 7 in einer ersten optionalen Erweiterungsausführung dargestellt. Die Erweiterungsausführung berücksichtigt zusätzlich den Verlust des dritten Zahns 230 des Patienten, welcher nun ebenfalls mithilfe des Prothesensystems 100 ersetzt werden muss. Der modulare Aufbau des Zahnprothesensystems 100 ermöglicht, das ursprünglich am dritten Zahn 230 befestigte Befestigungsmittelmodul 130 durch ein Ersatzmodul, in diesem Fall ein Retentionsfeldmodul 120 mit einem Retentionsfeld 121 zu ersetzen. Das Ersatzmodul weist hierzu ein komplementär in die Führungsaufnahme 142 des benachbart angeordneten Retentionsfeldmoduls 120 eingreifendes Einschubteil 141 auf bzw. ist mit diesem einstückig ausgebildet. Zum Austausch der Module wird das Verbindungsmittel 150 gelöst, bspw. indem dieses erwärmt wird. Anschließend lässt sich das Befestigungsmittelmodul 130 aus der Führungsaufnahme 142 herausziehen und durch das als Retentionsfeldmodul 120 ausgebildete Ersatzmodul ersetzen. In das Retentionsfeld 121 des Ersatzmoduls werden dann ein dritter Ersatzzahn 330 sowie der zugehörige Abschnitt des Prothesensattels 350 eingegossen, wodurch gleichzeitig das Verbindungsmittel 150 erneut ausgebildet wird.

Alternativ kann wie anhand der in der Figur 8 dargestellten zweiten optionalen Erweiterungsausführung als erstes Ersatzmodul ein Retentionsfeldmodul 120 mit einem Retentionsfeld 121, einem Einschubteil 141, welches gemeinsam mit der Führungsaufnahme 142 des benachbart angeordneten Retentionsfeldmoduls 120 des Prothesensystems 100 ein Ausrichtmittel 140 bildet vorgesehen sein, das zusätzlich mit einer Führungsaufnahme 142 ausgebildet ist. Diese Führungsaufnahme 142 bildet wiederum ein Ausrichtmittel 140 mit einem Einschubteil 141 eines zweiten Ersatzmoduls, nämlich eines Befestigungsmittelmoduls 130, das zur Befestigung am bislang ungenutzten, vierten Zahn 240 eine Klammer 132 als Befestigungsmittel 131 aufweist. Der Austausch der Module erfolgt wie zuvor beschrieben.

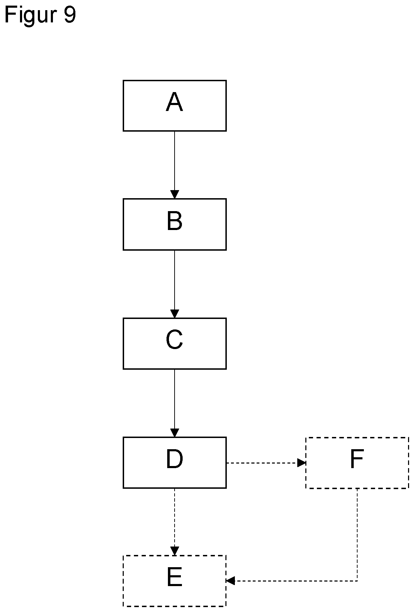

Die Figur 9 zeigt ein Flussdiagramm eines beispielhaften Ablaufs des erfindungsgemäßen Verfahrens zur Herstellung und/oder Erweiterung einer beispielhaften Ausführungsform eines erfindungsgemäßen Zahnprothesensystems 100. Das dargestellte Verfahren wird nachfolgend beispielhaft anhand der beispielhaften Ausführungsformen gemäß der zuvor beschriebenen Figuren erörtert.

In einem ersten Verfahrensschritt A werden gemäß der Figur 1 die das Zahnprothesensystem 100 ausbildenden Einzelmodule, ein Prothesenbasismodul 110, insbesondere eine Oberkieferplatte oder ein Unterkieferbügel sowie drei Retentionsfeldmodule 120 mit Retentionsfeldern 121 zur Verbindung mit Zahnersatz 300 und teils zusätzlich mit Befestigungsmitteln 131 zur Befestigung des Zahnprothesensystems 131 an der Restbezahnung 200 eines Patienten festgelegt. Üblicherweise wird hierzu ein virtuelles oder physikalisches Modell der Mundsituation, d. h. der Kiefer- und Gaumengeometrie sowie des Restzahnbestands 200 des Patienten erstellt und in einem zweiten Verfahrensschritt B anhand des Modells eine mögliche Einschubachse z entlang derer das Zahnprothesensystem 100 in die Restbezahnung 200 des Patienten einschiebbar und an dieser befestigbar ist ermittelt. Die der Einschubachse z entsprechende Stellung und/oder Position des Prothesenbasismoduls 110 sowie der Retentionsfeldmodule 120 wird in einem dritten Verfahrensschritt C mittels Ausrichtmitteln 140 vorgegeben (siehe ebenfalls Figur 1).

In einem vierten Verfahrensschritt D werden die in der der Einschubachse z entsprechenden und von den Ausrichtmitteln 140 vorgegebenen Stellung und/oder Position ausgerichteten Einzelmodule, beispielhaft gemäß der Figur 5 ein Retentionsfeldmodul 120 mit integriertem Unterkieferbügel, sowie zwei Befestigungsmittelmodule 130 mittels eines Verbindungsmittels 150 lösbar miteinander verbunden. Nach einer vorteilhaften Verfahrensvariante umfasst das Verbindungsmittel 150 einen guss- und formfähigen Kunststoff, insbesondere ein fließfähiges Kaltpolymerisat und wird zur Verbindung der Einzelmodule und ebenfalls im Verfahrensschritt D auch zur Ausbildung des Zahnersatzes 300 gegossen.

Zur Erweiterung und/oder zur Reparatur des Zahnprothesensystems 100 werden wahlweise bereits im Verfahrensschritt A oder in einem optionalen Verfahrensschritt F ein oder mehrere zur Erweiterung und/oder zum Austausch geeignete Ersatzmodule, gemäß der Figur 8 zum Beispiel ein Retentionsfeldmodul 120 und ein Befestigungsmittelmodul 130 vorgesehen, deren Stellung und/oder Position zueinander und zu den übrigen Einzelmodulen entweder anhand der ursprünglich ermittelten Einschubachse z oder anhand einer neu ermittelten Einschubachse z festgelegt und durch die Ausrichtmittel 140 vorgegeben wird.

Zum Austausch einzelner Einzelmodule, insbesondere zur Erweiterung und/oder zur Reparatur des Zahnprothesensystems 100 kann in einem fünften Verfahrensschritt E die Verbindung zwischen den Einzelmodulen durch Erwärmen des Verbindungsmittels 150 gelöst und ein Einzelmodul, gemäß der Figur 7 ein Befestigungsmittelmodul 130 durch das entsprechende Ersatzmodul, gemäß der Figur 7 ein Retentionsfeldmodul 120 ersetzt werden.

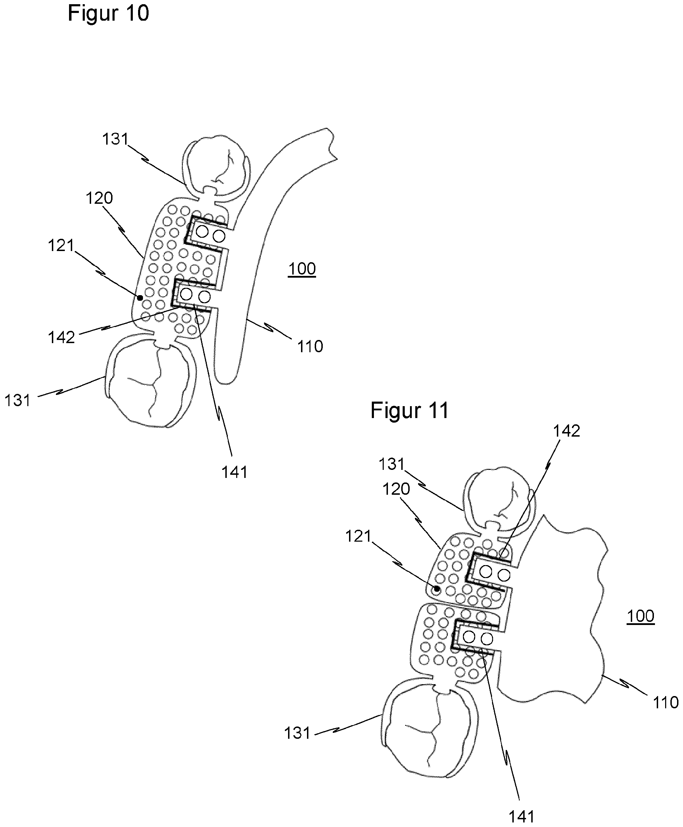

Die Figuren 10 und 11 zeigen jeweils eine schematische Draufsicht einer dritten bzw. vierten beispielhaften Ausführungsform eines erfindungsgemäßen Zahnprothesensystems 100, welches jeweils ein als Unterkieferbügel (Figur 10) bzw. als Kieferplatte (Figur 11) ausgebildetes Prothesenbasismodul 110 mit zwei sich einstückig anschließenden Einschubteilen 141 aufweist. Die Ausrichtung der Einschubteile 141 verläuft jeweils in Richtung des Kieferkamms gerichtet. Gemäß der Figur 10 umfasst das Prothesensystem 100 ferner ein Retentionsfeldmodul 120 mit zwei komplementär zu den Einschubteilen 141 ausgebildeten Führungsaufnahmen 142 sowie einem Retentionsfeld 121 und zwei Befestigungsmitteln 131. Gemäß der Figur 11 können die Einschubteile 141 aber auch in jeweils eine Führungsaufnahme 142 zweier einzelner Retentionsfeldmodule 120 passend eingeführt werden. Die zwei einzelnen Retentionsfeldmodule 120 verfügen jeweils über ein Retentionsfeld 121 sowie ein Befestigungsmittel 131.

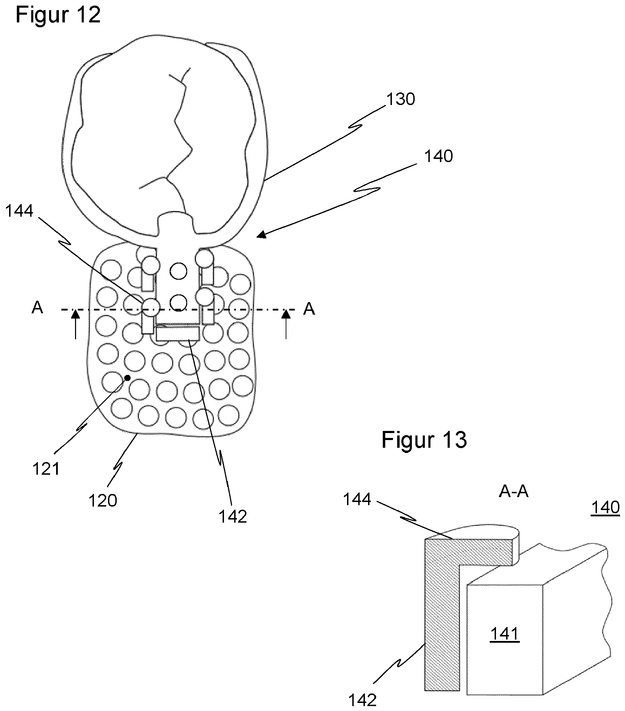

Eine schematische Draufsicht einer ersten beispielhaften Ausführungsform eines Ausrichtmittels 140 für ein erfindungsgemäßes Zahnprothesensystem 100 ist in der Figur 12 dargestellt, eine zugehörige Schnittansicht zeigt die Figur 13. Das Ausrichtmittel 140 ist auch in dieser Variante grundsätzlich in der bereits beschriebenen quaderförmigen und nach oben geöffneten Geometrie ausgebildet. Zusätzlich umfasst die mit dem Retentionsfeld 121 des Retentionsfeldmoduls 120 verbundene Führungsaufnahme 142 Rückhaltemittel 144, die eine Verankerung und zusätzlichen Führung für das seitlich in die Führungsaufnahme 142 einschiebbare Einschubteil 141 des Befestigungsmittelmoduls 130 bilden.

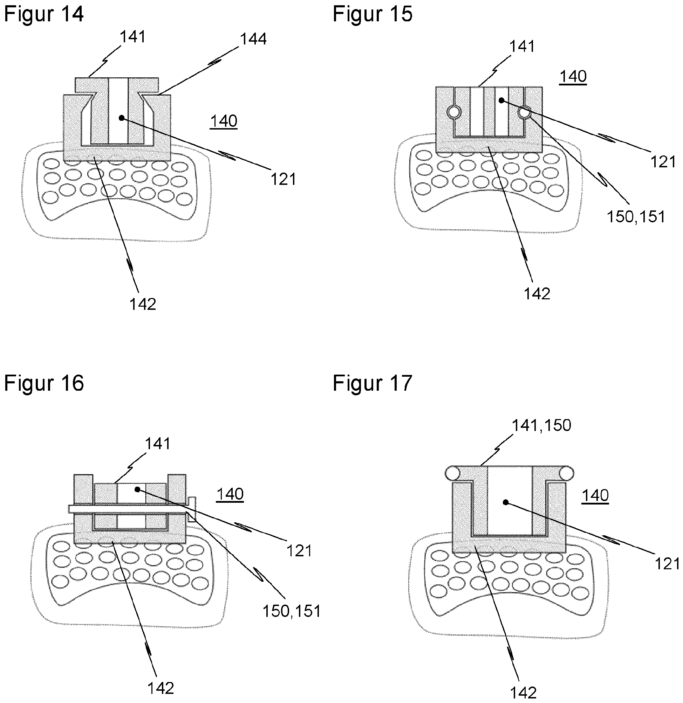

Eine ähnliche Ausführung eines Ausrichtmittels 140 mit Rückhaltemitteln 144 ist der Figur 14 zu entnehmen. Gemäß dieser Variante sind die Rückhaltemittel 144 einstückig sowohl am Einschubteil 141 als auch an der Führungsaufnahme 142 komplementär ineinandergreifend ausgebildet.

Die Figuren 15 bis 17 zeigen jeweils einen schematischen Teilschnitt in Seitenansicht von beispielhaften Ausführungsformen eines Verbindungsmittels 150 für ein erfindungsgemäßes Zahnprothesensystem 100. Das Verbindungsmittel 150 kann grundsätzlich nach den aus dem Stand der Technik bekannten Verbindungen, wie Spezialkleber, Lasern, Löten, Matrize und Patrize-Geschiebeverbindungen sowie Raster- und Einschubsysteme oder aber Verbindungen auf Basis von Adhäsions- und Reibungskräften, wie jene nach dem bekannten Teleskop- und Konuskronenprinzip ausgeführt sein. Die Einschubteile 141 der Figuren 14 bis 17 sind jeweils von beispielhaften Ausgestaltungen von Retentionsfeldern 121 durchsetzt.

In der Figur 15 wird eine lösbare Verbindung zwischen Führungsaufnahme 142 und Einschubteil 141 durch ein als zwei parallel zur Einschubrichtung des Einschubteils 141 in die Führungsaufnahme 142 verlaufende Bolzen 151 ausgebildetes Verbindungmittel 150 realisiert. Gemäß der Figur 16 ist das Verbindungsmittel 150 durch einen einzelnen, orthogonal zur Einschubrichtung verlaufenden Bolzen 151 ausgebildet, die Figur 17 zeigt ein T-Bolzenartiges Einschubteil 141 als Verbindungsmittel 150.

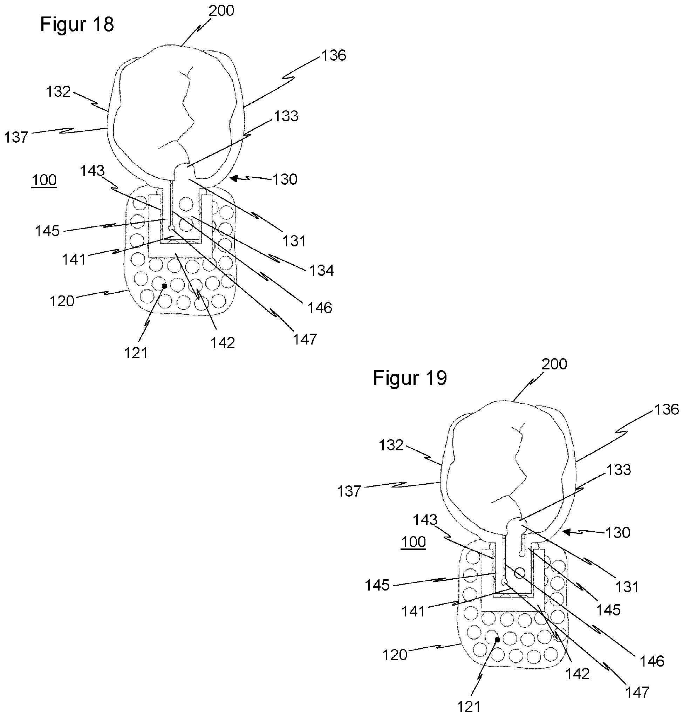

In den Figuren 18 und 19 ist jeweils eine schematische Draufsicht einer ersten bzw. einer zweiten beispielhaften Ausführungsform eines am Ausrichtmittel 140, genauer am Einschubteil 141 des Ausrichtmittels 140, vorgesehenen Federkraftmittels 145 gezeigt. Das Federkraftmittel 145 umfasst einen Federschlitz 146, der sich entlang des Einschubteils 141 des als Klammer 132 ausgebildeten Befestigungsmittels 131 bzw. dessen Befestigungsmittelarms 134 erstreckt und einen ersten Klammerarm 136 sowie einen zweiten Klammerarm 137 zueinander in der Zahnäquatorebene des Restzahns 200 und/oder einer Ebene parallel zur Zahnäquatorebene beweglich federnd lagert. An einem Ende des Federschlitzes 146 ist eine Federbohrung 147 ausgebildet. Die Geometrie des Federschlitzes 146, insbesondere dessen Länge und der Federbohrung 147, insbesondere deren Durchmesser, aber auch die Positionierung der Federbohrung 147 sowie die sich daraus ergebende Wandstärke des Einschubteils 141 dienen der Einstellung der Federhärte. Besonders vorteilhaft in dieser Ausführung, aber auch für die anderen beispielhaften Ausführungen der Erfindung einsetzbar, wird das Lagerspiel 143 zwischen Einschubteil 141 und Führungsaufnahme 142 mit Silikon gefüllt, bevor das Verbindungsmittel 150 angebracht wird. Hierdurch kann bspw. eine Beweglichkeit des Einschubteils 141 innerhalb der Führungsaufnahme 142 im Rahmen des Lagerspiels 143 einerseits, und andererseits ein Aufspreizen des Einschubteils 141 sowie der Klammerarme 136, 137 ermöglicht werden.

Die in der Figur 18 gezeigte, erste beispielhafte Ausführungsform weist ein einzelnes Federkraftmittel 145 mit Federschlitz 146 und Federbohrung 147 auf, wodurch im Wesentlichen der erste Klammerarm 136 beweglich, insbesondere federnd spreizbar gelagert ist. Gemäß der in der Figur 19 gezeigten zweiten beispielhaften Ausführungsform können zwei Federkraftmittel 145 mit jeweiligem Federschlitz 146 und Federbohrung 147 vorgesehen sein, um sowohl den ersten Klammerarm 136 als auch den zweiten Klammerarm 137 beweglich, insbesondere federnd spreizbar zu lagern. Gemäß beider Ausführungsformen können vorteilhaft durch gleichmäßigere Verteilung des Anpressdrucks über einen größeren Bereich der Auflagefläche der Klammerarme 136, 137 die Haltekraft erhöht und gleichzeitig der Abrieb der Restbezahnung 200 verringert werden.

### Bezugszeichenliste

- 100: Zahnprothesensystem
- 110: Prothesenbasismodul
- 120: Retentionsfeldmodul
- 121: Retentionsfeld
- 130: Befestigungsmittelmodul
- 131: Befestigungsmittel
- 132: Klammer
- 133: Auflage
- 134: Befestigungsmittelarm
- 135: Steckverbindung
- 136: erster Klammerarm
- 137: zweiter Klammerarm
- 140: Ausrichtmittel
- 141: Einschubteil
- 142: Führungsaufnahme
- 143: Lagerspiel
- 144: Rückhaltemittel
- 145: Federkraftmittel
- 146: Federschlitz
- 147: Federbohrung
- 150: Verbindungsmittel
- 151: Bolzen
- 200: Restbezahnung
- 210: erster Zahn, auch Zahnimplantat oder Krone
- 211: Zahnoberfläche
- 220: zweiter Zahn, auch Zahnimplantat oder Krone
- 230: dritter Zahn, auch Zahnimplantat oder Krone
- 300: Zahnersatz
- 310: erster Ersatzzahn
- 320: zweiter Ersatzzahn
- 330: dritter Ersatzzahn
- 350: Prothesensattel

- A: erster Verfahrensschritt: Planung des Zahnprothesensystems
- B: zweiter Verfahrensschritt: Ermittlung einer möglichen Einschubachse
- C: dritter Verfahrensschritt: Einstellen der Ausrichtmittel
- D: vierter Verfahrensschritt: Verbinden der Einzelmodule
- E: fünfter Verfahrensschritt: Ersetzen/Austauschen eines Einzelmoduls
- F: optionaler Verfahrensschritt: Ermittlung einer geänderten Einschubachse und Nachjustieren der Ausrichtmittel
- z: Einschubachse

## Patentansprüche

1. Zahnprothesensystem (100), aufweisend mindestens ein Prothesenbasismodul (110), insbesondere eine Oberkieferplatte oder einen Unterkieferbügel, ein oder mehrere Retentionsfeldmodule (120) zur Verbindung mit Zahnersatz und/oder ein oder mehrere Befestigungsmittelmodule (130) zur Befestigung des Zahnprothesensystems (100) an der Restbezahnung (200) eines Patienten,
**dadurch gekennzeichnet, dass**
das mindestens eine Prothesenbasismodul (110), das eine oder die mehreren Retentionsfeldmodule (120) sowie das eine oder die mehreren Befestigungsmittelmodule (130) modular als separate Einzelmodule (110, 120, 130) ausgebildet sind und jeweils über Ausrichtmittel (140) in einer durch die Ausrichtmittel (140) zueinander vorgegebenen Stellung und/oder Position derart ausrichtbar sind, dass das Zahnprothesensystem (100) entlang einer Einschubachse (z) in die Restbezahnung (200) des Patienten einführbar und daran befestigbar ist.

2. Zahnprothesensystem (100) nach Anspruch 1,
**dadurch gekennzeichnet, dass**
das eine oder die mehreren Retentionsfeldmodule (120) mindestens ein Retentionsfeld (121) zur Verbindung mit dem Zahnersatz (300) und/oder das eine oder die mehreren Befestigungsmittelmodule (130) mindestens ein Befestigungsmittel (131) zur Befestigung des Zahnprothesensystems (100) an der Restbezahnung (200) eines Patienten aufweisen.

3. Zahnprothesensystem (100) nach Anspruch 2,
**dadurch gekennzeichnet, dass**
das eine oder die mehreren Retentionsfeldmodule (120) und das eine oder die mehreren Befestigungsmittelmodule (130) jeweils einstückig mit dem mindestens einen Retentionsfeld (121) bzw. mit dem mindestens einen Befestigungsmittel (131) ausgebildet sind.

4. Zahnprothesensystem (100) nach einem der vorhergehenden Ansprüche,
**dadurch gekennzeichnet, dass**
das eine oder die mehreren Retentionsfeldmodule (120) sowohl mindestens ein Retentionsfeld (121) zur Verbindung mit dem Zahnersatz (300) als auch mindestens ein Befestigungsmittel (131) zur Befestigung des Zahnprothesensystems (100) an der Restbezahnung (200) des Patienten aufweisen.

5. Zahnprothesensystem (100) nach einem der vorhergehenden Ansprüche,
**dadurch gekennzeichnet, dass**
die Ausrichtmittel (140) jeweils ein Einschubteil (141) und eine komplementär dazu ausgebildete Führungsaufnahme (142) aufweisen, wobei das Einschubteil (141) von der Führungsaufnahme (142) in eine Endposition geführt und dort aufgenommen wird.

6. Zahnprothesensystem (100) nach Anspruch 5,
**dadurch gekennzeichnet, dass**
das Einschubteil (141) innerhalb der Führungsaufnahme (142) in der Endposition mit einem Lagerspiel (143), insbesondere mit einem Lagerspiel (143) in einem Bereich zwischen 0,01 mm und 5,0 mm, gelagert ist.

7. Zahnprothesensystem (100) nach einem der Ansprüche 5 oder 6,
**dadurch gekennzeichnet, dass**
das mindestens eine Prothesenbasismodul (110) und/oder das eine oder die mehreren Retentionsfeldmodule (120) und/oder das eine oder die mehreren Befestigungsmittelmodule (130) jeweils mindestens ein Einschubteil (141) aufweisen und mindestens ein Retentionsfeldmodul (120) eine oder mehrere Führungsaufnahmen (142) aufweist.

8. Zahnprothesensystem (100) nach einem der vorhergehenden Ansprüche,
**dadurch gekennzeichnet, dass**
das eine oder die mehreren Befestigungsmittelmodule (130) mittelbar über ein Retentionsfeld (121) oder über ein Retentionsfeldmodul (120) mit dem Prothesenbasismodul (110) verbunden oder verbindbar sind.

9. Zahnprothesensystem (100) nach einem der vorhergehenden Ansprüche,
**dadurch gekennzeichnet, dass**
das mindestens eine Prothesenbasismodul (110), das eine oder die mehreren Retentionsfeldmodule (120), das eine oder die mehreren Befestigungsmittelmodule (130) über ein Verbindungsmittel (150) lösbar miteinander verbunden oder verbindbar sind.

10. Zahnprothesensystem (100) nach Anspruch 9,
**dadurch gekennzeichnet, dass**
das Verbindungsmittel (150) einen gieß- und formfähigen Kunststoff, insbesondere ein fließfähiges Kaltpolymerisat umfasst.

11. Zahnprothesensystem (100) nach einem der Ansprüche 9 oder 10,
**dadurch gekennzeichnet, dass**
die Verbindung zwischen dem mindestens einen Prothesenbasismodul (110), dem einen oder den mehreren Retentionsfeldmodulen (120) sowie dem einen oder den mehreren Befestigungsmittelmodulen (130) durch Erwärmung des Verbindungsmittels (150) lösbar ist.

12. Zahnprothesensystem (100) nach einem der vorhergehenden Ansprüche,
**dadurch gekennzeichnet, dass**
das Ausrichtmittel (140), insbesondere ein Einschubteil (141) des Ausrichtmittels (140), oder das Befestigungsmittel (131) zwei Werkstoffe aufweist, wobei insbesondere die Werkstoffe voneinander abweichende Federhärten und/oder Farbeigenschaften und/oder Schmelzeigenschaften aufweisen.

13. Zahnprothesensystem (100) nach einem der vorhergehenden Ansprüche,
**dadurch gekennzeichnet, dass**
das Ausrichtmittel (140), insbesondere ein Einschubteil (141) des Ausrichtmittels (140), und/oder das Befestigungsmittel (131) ein Federkraftmittel (145) aufweist.

14. Verfahren zur Herstellung und/oder Erweiterung eines Zahnprothesensystems (100), insbesondere eines Zahnprothesensystems (100) nach einem der vorhergehenden Ansprüche, wobei
- in einem ersten Verfahrensschritt (A) die das Zahnprothesensystem (100) bildenden Einzelmodule (110, 120, 130), mindestens ein Prothesenbasismodul (110), insbesondere eine Oberkieferplatte oder ein Unterkieferbügel, ein oder mehrere Retentionsfeldmodule (120) zur Verbindung mit Zahnersatz (300) und/oder ein oder mehrere Befestigungsmittelmodule (130) zur Befestigung des Zahnprothesensystems (100) an der Restbezahnung (200) eines Patienten festgelegt werden,
- in einem zweiten Verfahrensschritt (B) eine mögliche Einschubachse (z) entlang derer das Zahnprothesensystem (100) in die Restbezahnung (200) des Patienten einschiebbar und daran befestigbar ist ermittelt wird,
- in einem dritten Verfahrensschritt (C) eine der Einschubachse (z) entsprechende Stellung und/oder Position des mindestens einen Prothesenbasismoduls (110), des einen oder der mehreren Retentionsfeldmodule (120) sowie des einen oder der mehrere Befestigungsmittelmodule (130) zueinander, jeweils mittels Ausrichtmitteln (140) vorgegeben wird, und
- in einem vierten Verfahrensschritt (D) das mindestens eine Prothesenbasismodul (110), das eine oder die mehreren Retentionsfeldmodule (120) sowie das eine oder die mehreren Befestigungsmittelmodule (130) in der von den Ausrichtmitteln (140) vorgegebenen Stellung und/oder Position zueinander mittels eines Verbindungsmittels (150) lösbar verbunden werden.

15. Verfahren nach Anspruch 14,
**dadurch gekennzeichnet, dass**
das Verbindungsmittel (150) einen guss- und formfähigen Kunststoff, insbesondere ein fließfähiges Kaltpolymerisat umfasst und in dem vierten Verfahrensschritt (D) zur Verbindung des mindestens einen Prothesenbasismoduls (110), des einen oder der mehreren Retentionsfeldmodule (120) sowie des einen oder der mehreren Befestigungsmittelmodule (130) und gleichzeitig zur Ausbildung des Zahnersatzes (300) gegossen wird.

16. Verfahren nach einem der Ansprüche 14 oder 15,
**dadurch gekennzeichnet, dass**
ein oder mehrere zur Erweiterung oder zum Austausch geeignet und als Ersatzmodule (110, 120, 130) bezeichnete, Prothesenbasismodule (110) und/oder Retentionsfeldmodule (120) und/oder Befestigungsmittelmodule (130) vorgesehen werden, deren Stellung und/oder Position zueinander und zu den übrigen Einzelmodulen (110, 120, 130) wie Prothesenbasismodulen (110) und/oder Retentionsfeldmodulen (120) und/oder Befestigungsmittelmodulen (130) anhand einer Einschubachse (z) festgelegt und durch Ausrichtmittel (150) vorgegeben wird.

17. Verfahren nach einem der Ansprüche 14 bis 16,
**dadurch gekennzeichnet, dass**
in einem fünften Verfahrensschritt (E) die Verbindung zwischen dem mindestens einen Prothesenbasismodul (110), dem einen oder den mehreren Retentionsfeldmodulen (120) und/oder dem einen oder den mehreren Befestigungsmittelmodulen (130) durch Erwärmen des Verbindungsmittels (150) gelöst und das mindestens eine Prothesenbasismodul (110), das eine oder die mehreren Retentionsfeldmodule (120) und/oder das eine oder die mehreren Befestigungsmittelmodule (130) durch ein oder mehrere zur Erweiterung oder zum Austausch vorgesehene und als Ersatzmodule (110, 120, 130) bezeichnete Prothesenbasismodule (110) und/oder Retentionsfeldmodule (120) und/oder Befestigungsmittelmodule (130) ausgetauscht werden.
